# FASCICULE DE BREVET EUROPEEN

(11) **EP 1 314 384 B1**
(45) Date de publication et mention de la délivrance du brevet: **24.05.2006**
(21) Numéro de dépôt: 02356246.5
(22) Date de dépôt: 27.11.2002
(51) Int. Cl.: A47J 36/20, A47J 27/08

(54) **Panier de cuisson d'aliments pour autocuiseur comportant un moyen de reglage du passage de la vapeur**
Kochbehälter für Dampfdruckkochtopf mit Dampfregelvorrichtung
Cooking basket for pressure cooker with control means for passage of vapour

(30) Priorité: 27.11.2001 FR 0115578
(43) Date de publication de la demande: 28.05.2003
(73) Titulaire: SEB S.A., 69130 Ecully (FR)
(72) Inventeur: Murat, Marie Pierre, 21121 Fontaine les Dijon (FR); Birlouez-Aragon, Inès, 75231 Paris Cedex 05 (FR); Murat, Pascal Roland Clément, 21121 Fontaine les Dijon (FR); Rhetat, Eric Christian Jacques, 21000 Dijon (FR)
(74) Mandataire: Martin, Didier Roland Valéry

(56) Documents cités:
- EP-A- 0 165 152
- DE-C- 139 643
- FR-A- 2 643 805
- US-A- 4 238 996
- PATENT ABSTRACTS OF JAPAN vol. 1998, no. 01, 30 janvier 1998 (1998-01-30) & JP 09 224828 A (HOUGETSUDOU:KK), 2 septembre 1997 (1997-09-02)

## Description

La présente invention se rapporte au domaine technique général des appareils de cuisson sous pression, tels que des autocuiseurs, et plus particulièrement aux paniers de cuisson d'aliments qui sont destinés à être mis en place dans ces appareils, avantageusement à une certaine hauteur dans la cuve, pour assurer la cuisson des aliments.

La présente invention concerne un panier de cuisson d'aliments destiné à la cuisson sous pression dans un autocuiseur, ledit panier étant formé par une feuille d'un matériau rigide définissant le fond et les parois latérales du panier, ladite feuille étant pourvue de perforations permettant le passage de la vapeur d'eau dans l'enceinte de l'autocuiseur et à travers les aliments, en particulier les légumes contenus dans le panier.

La présente invention concerne également un autocuiseur destiné à recevoir un panier de cuisson conforme à l'invention.

Pour permettre à l'utilisateur d'un autocuiseur de réaliser la cuisson d'aliments autrement que par immersion des aliments dans le liquide contenu dans la cuve de cuisson, il est nécessaire de prévoir d'intégrer dans la cuve un panier de cuisson contenant les aliments, ainsi que des moyens de support du panier de cuisson ménagés dans ou à partir des parois et à une certaine hauteur prédéterminée, de manière à permettre de supporter le panier à une hauteur prédéterminée au-dessus du liquide de cuisson. Il est également nécessaire de prévoir un certain nombre de perforations dans le panier, de manière à permettre la circulation de la vapeur non seulement dans l'enceinte de l'autocuiseur, mais également à travers l'aliment, de manière à favoriser un échange de chaleur optimal.

De tels systèmes sont largement connus et mettent en oeuvre des paniers, généralement métalliques, de forme et de contenance diverses, les moyens de support des paniers étant constitués d'un support amovible, réalisé par exemple à partir d'un fil d'acier mis en place sur le fond de la cuve lorsque l'utilisateur veut réaliser une cuisson à la vapeur. Il existe également des moyens de support formés par des pièces rapportées sur la paroi de la cuve (rivets) ou par des déformations localisées de la paroi de la cuve, ces déformations supportant le panier à une hauteur prédéterminée du fond de la cuve.

Les paniers métalliques connus à ce jour peuvent être regroupés en deux types principaux.

Le premier type est formé par des paniers dits « *filets »* obtenus à l'aide de fils d'acier entrelacés ou maillés et pourvus d'une structure de rigidification leur permettant une certaine tenue mécanique. De tels paniers donnent généralement satisfaction, mais souffrent d'inconvénients liés à la difficulté de contenir les aliments en raison du large maillage et à leur grande difficulté de nettoyage, en raison précisément du maillage qui nuit notamment à une bonne évacuation des déchets d'aliments. Par ailleurs, la durée de vie de tels paniers est réduite en raison de leur relative fragilité.

Le second type de paniers connus est formé par des paniers métalliques obtenus par emboutissage et comportant une série de perforations ménagées soit au fond du panier, soit au fond et à travers les parois latérales. Ces paniers donnent généralement satisfaction et sont d'une nettoyabilité acceptable. En revanche, leur capacité à assurer un bon échange de chaleur avec les aliments est éminemment variable et difficilement maîtrisée et maîtrisable.

On sait par ailleurs qu'une alimentation équilibrée nécessite un apport régulier de vitamines, en particulier de vitamine C, à partir de fruits et légumes qui en sont les sources principales. Or, il apparaît que les études effectuées sur ce sujet ont montré non seulement un niveau de consommation de fruits et légumes insuffisant dans la population au cours des dernières années, mais encore une tendance générale exprimant une baisse relative de cette consommation. Parmi les facteurs pouvant expliquer ce faible niveau de consommation et cette tendance générale, on note, chez le consommateur potentiel, l'existence d'une série de contraintes d'usage tendant à limiter la consommation des fruits et légumes, à savoir: la nécessité d'un approvisionnement fréquent, la nécessité d'un nettoyage, voire d'un épluchage, et enfin la nécessité d'avoir recours à une opération de cuisson pour les légumes, étant entendu que cette dernière contrainte, perçue négativement, est une contrainte de durée de cuisson.

Il existe donc de manière générale un besoin participant à l'amélioration des conditions générales d'alimentation, ou du moins à leur absence de dégradation, conduisant à rechercher des solutions permettant de réduire le temps de cuisson des aliments, et notamment des légumes.

Par ailleurs, on sait également que les vitamines sont très sensibles aux conditions de cuisson, et peuvent être détruites en tout ou partie, lessivées, voire dégradées, au cours de cette opération. Parmi l'ensemble des vitamines, la vitamine C est la plus fragile, alors même que les fruits et légumes contribuent pour environ 85% aux apports nutritionnels en vitamine C. Le maintien d'un taux de vitamine C dans les légumes aussi élevé que possible à l'issue d'une opération de cuisson, notamment sous pression, s'avère donc un problème extrêmement important.

Parmi les phénomènes de fragilité à la cuisson connus pour la vitamine C contenue dans les légumes, on peut rappeler que cette dernière est hydrosoluble lorsqu'elle est sous la forme de folates, ce qui la rend sensible au lessivage par l'eau de cuisson. Cette sensibilité au lessivage est un facteur très important de perte vitaminique, ce facteur pouvant varier selon la nature et le type du légume lui-même. Par ailleurs, la vitamine C est sensible à la chaleur et sera détruite de manière proportionnelle au couple temps / température appliqué lors de la cuisson.

Enfin, la vitamine C est sensible à l'oxydation et sera donc d'autant plus dégradée qu'elle sera mise au contact de l'air.

Il existe donc également un problème général de préservation des vitamines, notamment de la vitamine C, lors de la cuisson des légumes dans des appareils de cuisson sous pression tels que des autocuiseurs.

L'objet assigné à l'invention vise en conséquence à réaliser un nouveau panier de cuisson d'aliments destiné à la cuisson sous pression dans un autocuiseur, qui permette de réduire le temps de cuisson des aliments tout en préservant les vitamines présentes dans les aliments, notamment les légumes, en réduisant le phénomène de lessivage.

Un autre objet de l'invention vise à proposer un nouveau panier de cuisson d'aliments de conception et d'utilisation particulièrement simple et efficace.

Un autre objet de l'invention vise à proposer un nouveau panier de cuisson d'aliments qui permette d'optimiser la circulation de la vapeur dans l'enceinte de l'autocuiseur, sans perturber le fonctionnement des différents organes de sécurité de l'autocuiseur.

D'autres objets et avantages de l'invention seront explicités plus en détails à la lecture de la description qui suit et des dessins annexés donnés à titre d'exemples illustratifs et non limitatifs dans lesquels :
- La figure 1 illustre, selon une vue en perspective, un panier de cuisson conforme à l'invention avec un moyen de réglage du débit de vapeur.
- Les figures 2 et 2A illustrent, respectivement selon une vue partielle latérale en coupe et de côté, un panier de cuisson conforme à l'invention dont le fond est associé à un moyen de réglage du débit de vapeur.
- La figure 3 illustre, selon une vue partielle en coupe, un détail de réalisation du fond d'un panier conforme à l'invention associé à un moyen de réglage du débit de vapeur conforme à l'invention.
- La figure 4 illustre, selon une vue partielle de dessus, un panier de cuisson conforme à l'invention dans lequel les orifices du moyen de réglage du débit de vapeur sont alignés avec les perforations du panier.
- La figure 5 illustre, selon une vue identique à celle de la figure 4, un panier de cuisson conforme à l'invention dans lequel les orifices du moyen de réglage du débit de vapeur sont en position de désalignement total avec les perforations du panier, de telle manière que ces dernières sont recouvertes en totalité.
- La figure 6 illustre, selon une vue en coupe transversale, un autocuiseur conforme à l'invention et incorporant deux paniers de cuisson conformes à l'invention en position de superposition.

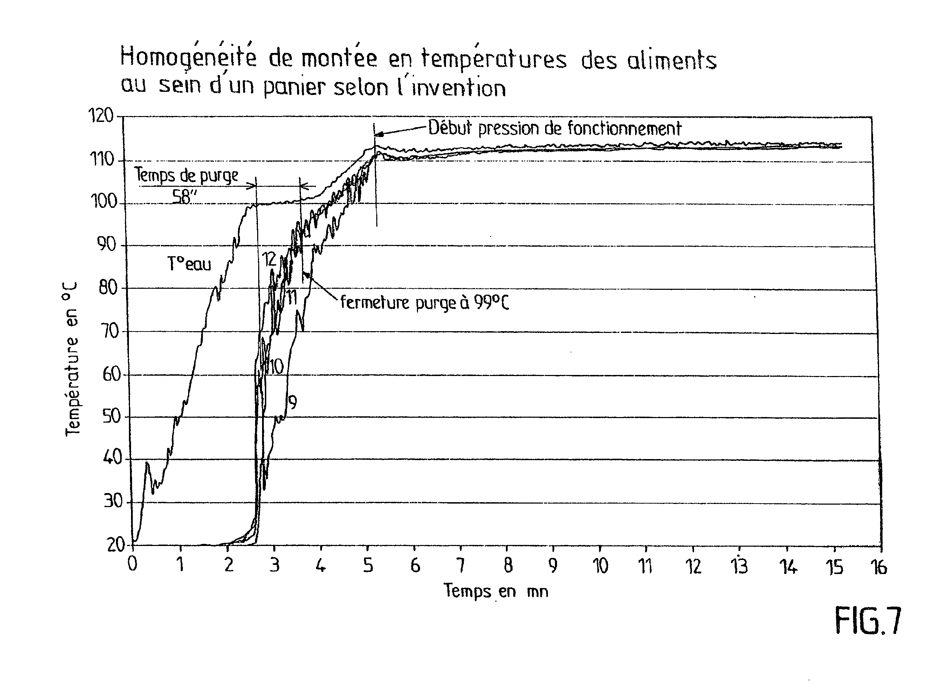

- La figure 7 illustre l'homogénéité de montée en températures des aliments au sein d'un panier de cuisson selon l'invention.

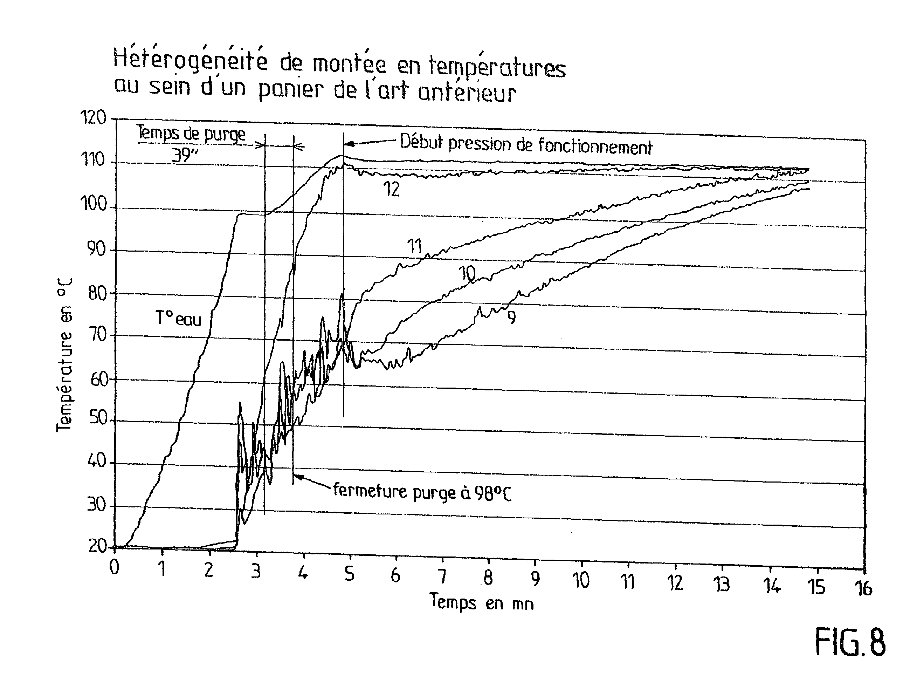

- La figure 8 illustre, selon une base comparable au graphe de la figure 7, l'hétérogénéité de montée en températures des aliments contenus dans un panier de cuisson de l'art antérieur.
- Les figures 9 et 10 illustrent, selon des vues en coupe transversale, une variante de réalisation de l'invention mettant en oeuvre un moyen de réglage du débit de vapeur sensible à la chaleur, respectivement en position de travail et en position de repos.

Le panier de cuisson d'aliments selon l'invention est destiné à être utilisé et disposé dans un appareil de cuisson d'aliments, du genre autocuiseur, qu'il s'agisse d'autocuiseurs à étrier, à mâchoires, à baïonnettes ou encore à trou d'homme, sans que cette liste soit considérée comme limitative.

Dans la description qui suit, le panier de cuisson conforme à l'invention sera avantageusement réalisé sous la forme d'un panier de forme circulaire, sans que cette forme soit limitative, les paniers de cuisson d'aliments conformes à l'invention pouvant au contraire présenter toute forme autre que circulaire, et par exemple rectangulaire, carré ou autre, sans pour autant sortir du cadre de l'invention.

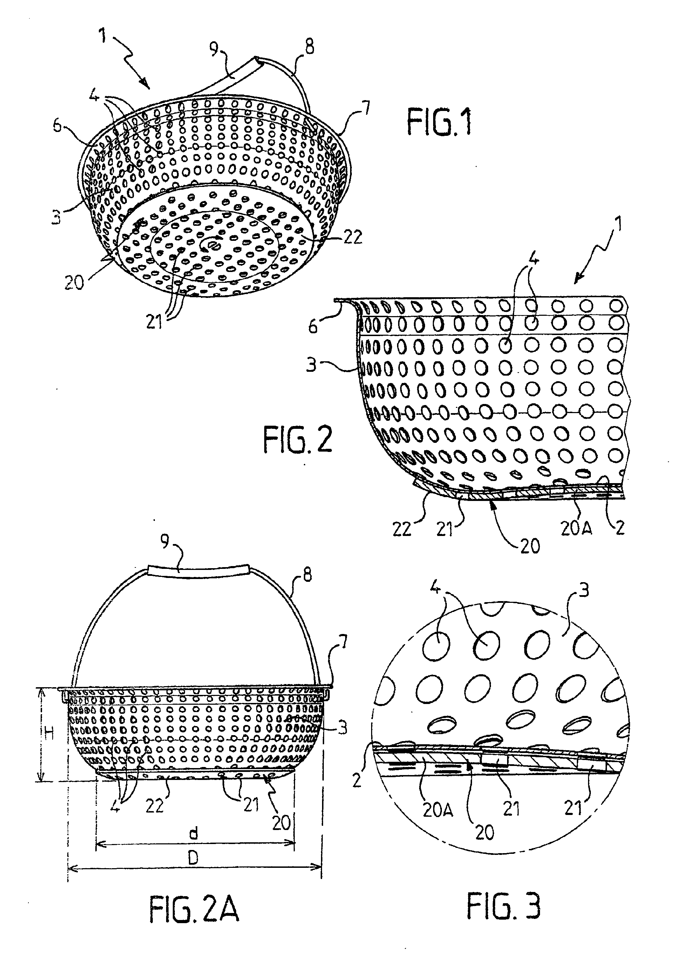

Le panier de cuisson d'aliments 1 illustré aux figures 1 à 6, 9 et 10 est destiné à la cuisson sous pression dans un autocuiseur, et il est formé par une feuille d'un matériau rigide définissant le fond 2 et les parois latérales 3 du panier 1, ladite feuille étant pourvue de perforations 4.

Au sens de l'invention, le matériau rigide pourra être à base de tous matériaux susceptibles de résister durablement et en continu à une utilisation dans un autocuiseur nécessitant un contact alimentaire, des phases successives et répétées de nettoyage et des phases de montée en températures et en pression.

Avantageusement, la feuille de matériau rigide sera métallique, et avantageusement en inox, étant entendu néanmoins que d'autres types de matériaux, et notamment des matériaux plastiques, peuvent être envisagés, sans pour autant sortir du cadre général de l'invention.

Selon une caractéristique importante de l'invention, les perforations 4 sont ménagées à travers le fond 2 et les parois latérales 3, et représentent au moins 30% de la surface totale de la feuille constituant le panier et formant sa surface totale.

Il est en effet apparu qu'en deçà de ce ratio exprimant un rapport entre la surface de la feuille formant le conteneur proprement dit et les perforations 4, la réalisation industrielle du panier était délicate, et surtout les effets relatifs à la diminution du temps de cuisson et à la rétention de vitamines dans les aliments contenus dans le panier 1 n'étaient ni optimisés, ni bénéfiques.

Avantageusement, les perforations 4 des parois latérales 3 sont réalisées sensiblement régulièrement sur le fond 2 et dès le bas des parois latérales 3 adjacentes au fond 2, ainsi que sensiblement sur toute la circonférence des parois latérales et jusqu'à une hauteur déterminée.

Il a en effet pu être observé que l'effet de rétention vitaminique et de réduction du temps de cuisson était d'autant plus significatif que les perforations 4 étaient situées dans la partie basse du panier 1 jusqu'à une hauteur déterminée correspondant sensiblement à la hauteur des aliments présents dans le panier de cuisson 1.

De manière préférentielle, les perforations 4 représentent au moins 35% de la surface totale de la feuille, et de préférence entre 35 et 58%.

De manière particulièrement avantageuse, et tel qu'illustré aux figures 1 à 6, 9 et 10, les perforations 4 sont réparties sensiblement régulièrement sur et à travers le fond 2 et les parois latérales 3. Il s'est en effet avéré que les meilleurs résultats étaient obtenus avec un panier comportant des perforations 4 sur le fond 2, et au moins sur une hauteur significative des parois latérales 3.

Tel qu'illustré aux figures 1 à 6, 9 et 10, et selon une variante préférentielle, les perforations 4 des parois latérales 3 sont réalisées jusqu'au bord supérieur 6 desdites parois latérales 3, de manière à obtenir un panier de cuisson dont la totalité de la surface est perforée régulièrement.

Tel qu'illustré aux figures, les perforations 4 sont avantageusement sensiblement circulaires et d'un diamètre, ou diamètre équivalent, au moins égal à 3 mm, et de préférence compris entre 3 et 5 mm. Les perforations 4 pourront néanmoins être de formes différentes et de tailles supérieures, sans pour autant sortir du cadre de l'invention.

Au sens de l'invention, on entendra par diamètre équivalent le diamètre de perforations 4 qui, bien que non circulaires, auraient la même surface que les perforations circulaires 4.

Les perforations 4, lorsqu'elles sont circulaires ou non, seront disposées à des distances régulières, et par exemple d'entraxe régulier compris entre 5 à 8 mm, l'épaisseur de la feuille du matériau rigide étant par exemple de l'ordre de 0,8 à 0,4 mm, de préférence 0,5 mm.

Tel qu'illustré aux figures, les perforations 4 pourront être disposées en lignes régulières ou selon des dispositions préférentielles de nomenclature en T, en U, en M ou en Z, selon l'arrangement géométrique des perforations les unes par rapport aux autres.

Tel qu'illustré en particulier aux figures 1 à 4, 9 et 10, le panier de cuisson d'aliments 1 conforme à l'invention est caractérisé par le fait que, les perforations 4 étant ménagées à travers le fond 2 et les parois latérales 3, ledit panier est pourvu d'un moyen de réglage 20 du débit de vapeur passant à travers le panier par les perforations 4, ledit moyen étant associé au fond 2 de manière à permettre de régler le passage de la vapeur à travers les perforations 4 au moins dudit fond 2, le réglage pouvant être discontinu (absence totale de passage ou passage à travers la totalité des sections de passage des perforations 4) ou continu en réglant la progressivité de découverte ou de fermeture des perforations 4.

Il s'est en effet avéré, notamment dans le cas d'aliments, et en particulier de légumes présentant une très grande surface d'échange au regard de leur masse, tel que par exemple des épinards ou même des haricots verts, que le gain de rétention en vitamine C était notablement amélioré lorsque l'on obstruait les perforations 4 du fond 2 du panier dans le cas de cuisson sous pression vapeur sans immersion. Ce gain en matière de rétention vitaminique est obtenu sans perte de temps de cuisson (voir tableau 1).

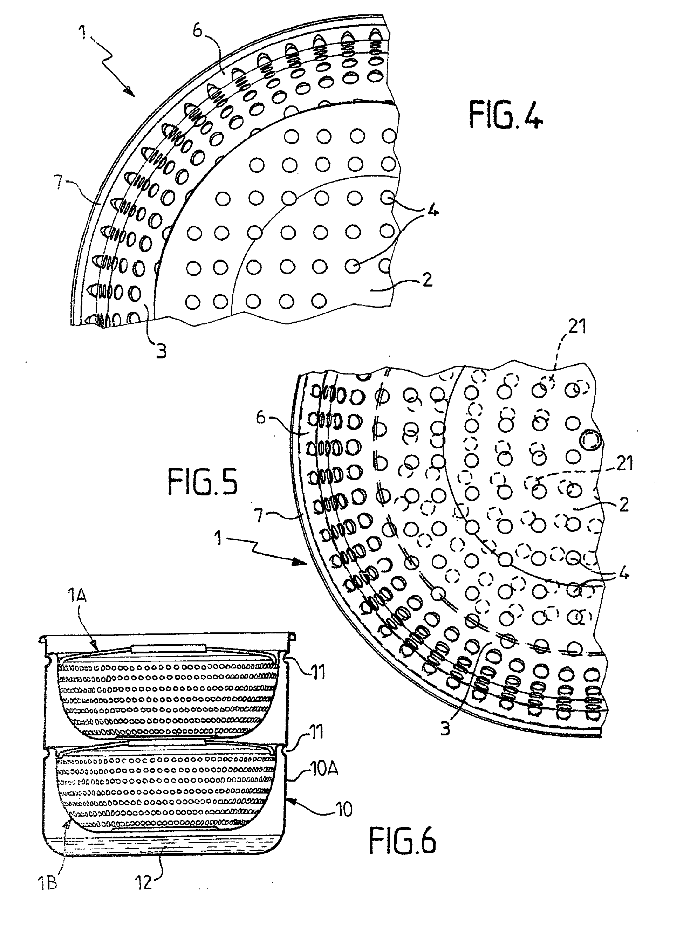

De manière avantageuse, le moyen de réglage 20 (figures 1 à 5) est mobile relativement au fond et comporte des orifices 21 permettant à l'utilisateur, par ajustement de la position dudit moyen 20, de découvrir totalement (figure 4)
ou partiellement les perforations 4, ou de les recouvrir totalement (figure 5).

Le moyen de réglage 20 est monté mobile relativement au fond 2 par tous moyens connus, par exemple par translation et par exemple à l'aide d'un axe de rotation central ou par tous moyens équivalents (rivets ou autres par exemple), le moyen de réglage 20 pouvant être disposé à l'intérieur ou à l'extérieur du panier 1, c'est-à-dire sur ou sous le fond 2. Avantageusement, le moyen de réglage 20 est disposé sous le fond 2 tel qu'illustré aux figures.

Tel qu'illustré aux figures, le moyen de réglage 20 est avantageusement formé par une pièce de forme conjuguée à celle du fond 2, de manière à recouvrir ledit fond sensiblement en totalité. Tel qu'illustré, la pièce formant le moyen de réglage 20 épousera au mieux la forme et la configuration du fond 2, et pourra être plane ou présenter des ondulations ou courbures sans pour autant sortir du cadre de l'invention.

Le moyen de réglage 20 sera pourvu d'orifices 21 de taille et de répartition identique à la taille et à la répartition des perforations 4 présentes au moins sur le fond 2, de manière à faciliter l'alignement avec les perforations 4 ou leur recouvrement total ou partiel.

Tel qu'illustré aux figures, le panier 1 étant circulaire, le moyen de réglage 20 sera formé par un disque 20A, par exemple métallique ou en tous matériaux présentant une bonne résistance à la chaleur, le disque pouvant être par exemple plat, les orifices 21 étant eux circulaires.

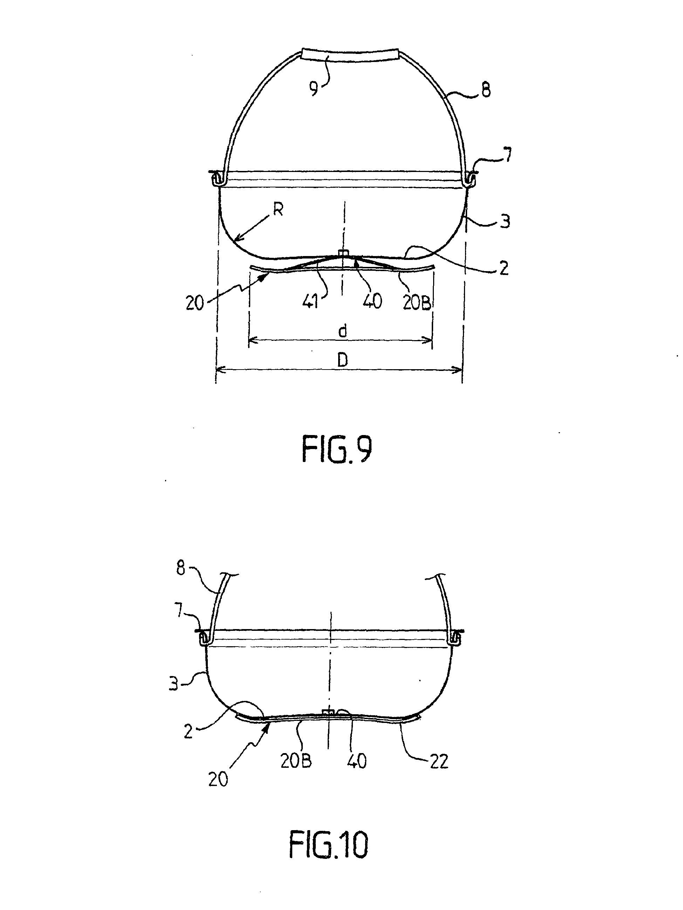

Tel qu'illustré aux figures 2A et 9, la jonction entre le fond 2 et les parois latérales 3 sera avantageusement réalisée de manière à présenter une courbure régulière, par exemple de valeur R supérieure ou égale à H/2. Il s'est en effet avéré que le maintien d'un rayon de courbure était de nature à réduire les perturbations internes dues au flux de cuisson, qui pouvait avoir tendance à gêner la bonne montée des dispositifs de sécurité de l'autocuiseur, et notamment de la ou des soupape(s) de sécurité et de verrouillage.

Avantageusement, le panier 1 selon l'invention sera de section circulaire avec un diamètre D (extérieur du panier) et une hauteur H sensiblement égale à 1/3 D.

De manière avantageuse, lorsque le moyen de réglage 20 est formé par un disque et lorsque la jonction entre le fond 2 et les parois latérales 3 présente une courbure de rayon R, le disque 20A et ses orifices 21 s'étendent en partie sur la courbure de rayon R, tel que visible à la figure 2. Selon cette particularité, la partie terminale 22 du disque forme une partie annulaire qui, avantageusement, présentera le même rayon de courbure R que le panier, le disque et ses orifices 21 s'étendant sur une portion seulement de la courbure, et de préférence sur environ 1/4 R, le diamètre d de la coupelle rapportée étant sensiblement de l'ordre de 3/4 D.

A titre de variante, et sans sortir du cadre de l'invention, il est envisageable que le moyen de réglage 20 soit formé par une simple feuille ou film d'un matériau poreux, dont la porosité est suffisante pour réduire le débit de vapeur à travers les perforations 4 du fond 2. Dans un tel cas en effet, la porosité de la feuille est suffisante pour obturer ou empêcher totalement ou partiellement, suivant sa porosité, le passage de la vapeur à travers les perforations 4 du fond 2. Selon cette variante, l'utilisateur ne peut régler le passage du flux de vapeur par déplacement de la feuille, le degré de passage de la vapeur étant prédéterminé et fonction de la porosité de la feuille.

En revanche, il est possible de fournir à l'utilisateur un jeu de plusieurs feuilles de porosité différente, à mettre en place dans l'autocuiseur contre le fond 2 en fonction de l'aliment ou du degré de passage de vapeur souhaité.

Tel qu'illustré aux figures 1 à 6, 9 et 10, les parois latérales 3 se terminent à leur extrémité supérieure par un bord courbe 6, s'étendant radialement et vers l'extérieur du panier en considération de son axe de symétrie axiale, et ce d'une longueur constante sur toute sa périphérie, c'est-à-dire périphériquement. Cette particularité permet à l'appareil de cuisson d'être positionné sans indexation angulaire particulière dans la cuve de cuisson de l'autocuiseur. Par ailleurs, la présence d'un bord courbe 6 continu et épousant, au jeu près nécessaire à l'insertion du panier, la paroi interne de la cuve de l'autocuiseur, force la vapeur à passer à travers le panier, et donc les aliments, optimisant ainsi le transfert de chaleur.

Le bord courbe 6 est avantageusement pourvu d'un jonc périphérique 7, par exemple métallique, rapporté et replié sur ledit bord, de manière à renforcer la rigidité du panier et parfaire sa finition.

Tel qu'illustré à la figure 1, le panier selon l'invention comporte une anse de préhension 8 montée pivotante entre une position de support du panier, tel qu'illustré à la figure 1, et au moins une position de repos où elle repose sur le bord supérieur 6 du panier, en suivant sensiblement la périphérie du bord. Selon cette configuration, l'anse de préhension 8 est sensiblement semi-circulaire.

Avantageusement, et selon l'invention, l'anse de préhension 8 comporte, sensiblement dans sa partie centrale, une portion de préhension 9 qui forme un retrait intérieur par rapport au reste de l'anse, de manière à ne pas reposer sur ledit bord 6.

La portion de préhension 9 est courbe et forme une partie courbe régulière définissant une partie concave 9A tournée vers l'extérieur du panier et une partie convexe 9B tournée vers l'intérieur du panier. Une telle particularité facilite grandement la préhension de l'anse, tout en évitant à l'utilisateur de se brûler.

La variante de réalisation illustrée aux figures 9 et 10 ne se différencie des autres variantes qu'en ce que le moyen de réglage 20 est monté mobile relativement contre le fond 2, par l'intermédiaire d'un moyen sensible à la chaleur 40, de manière à permettre de dégager les perforations 4 du fond dès l'atteinte d'une température préétablie. Le moyen de réglage 20 est disposé à l'intérieur du panier 1 ou de préférence à l'extérieur contre et sur la face externe du fond 2. Le moyen de réglage 20, par exemple un disque métallique ou plastique 20B plein (sans orifices) est relié et solidaire mécaniquement du fond 2, par exemple par un axe et/ou par le moyen sensible à la chaleur sensiblement dans sa partie centrale avec une possibilité de mobilité ou déplacement relatif et réversible entre deux positions stables. La première position (figure 10) dans laquelle le disque 20B est en appui contre le fond 2 correspond à une position de repos et de début de cuisson (température T₁ ambiante ou basse), le disque 20B obturant complètement les perforations 4. La seconde position (figure 9) dans laquelle le disque 20B est à distance du fond 2 correspond à une position de travail et de cuisson (température élevée T₂>T₁), les perforations 4 étant découvertes en totalité. Le passage de la position de repos à la position de travail est réversible et obtenu grâce à la sensibilité à la chaleur du moyen 40. Avantageusement, ce dernier sera un moyen changeant de forme ou d'état selon la température à laquelle il est soumis, par exemple un bilame 41. Sous l'effet de la chaleur de cuisson et dès l'atteinte de sa température de changement de forme T₂, le bilame 41 se déforme (figure 9) et déplace le disque 20B dans sa position de travail.

Tel qu'illustré à la figure 6, le panier de cuisson 1 est destiné à être disposé dans une cuve 10 d'un autocuiseur pourvu d'un couvercle (non représenté aux figures), de manière à réaliser une cuisson sous pression.

L'autocuiseur selon l'invention comprend une cuve 10 comportant des moyens de support 11 du panier 1 dans la cuve, lesdits moyens de support 11 étant ménagés radialement dans ou à partir des parois 10A de la cuve. Ces moyens de support 11 sont bien connus de l'homme du métier et peuvent consister en des bossettes (ou tout moyen similaire), obtenus par exemple par pressage ou déformation de la paroi, tel que décrit par exemple dans le brevet FR-2 783 685 du même demandeur. Selon cette configuration, le panier de cuisson 1 selon l'invention est déposé dans la cuve 10, de manière que le rebord 6 soit en appui contre les moyens de support 11, répartis angulairement à la même hauteur sur les parois latérales 3.

Tel qu'illustré à la figure 6, les moyens support 11 étant à une hauteur prédéterminée et suffisante du fond 10B de la cuve 10, le panier 1 repose à distance dudit fond 10B et du liquide 12 éventuellement contenu dans la cuve 10.

Selon une caractéristique importante de l'invention, l'autocuiseur conforme à l'invention comprend une cuve 10 qui comporte au moins deux rangées de moyens support 11 disposées chacune à des hauteurs de références différentes, de manière à permettre de disposer au moins deux paniers de cuisson superposés dans la cuve, tel qu'illustré à la figure 6. Grâce à cette disposition, il est ainsi possible de placer un premier panier 1A en position supérieure et un second panier 1B en position inférieure, les deux paniers n'étant toutefois pas immergés dans la réserve de liquide 12 et permettant en conséquence une cuisson d'aliments à la vapeur, sans avoir à les mélanger en utilisant, comme c'est le cas dans l'art antérieur, un seul et unique panier.

Par ailleurs, la maîtrise de la circulation de la vapeur dans l'enceinte de l'autocuiseur, grâce à la maîtrise de la densité des perforations, permet une telle cuisson différenciée sans pour autant perturber la montée des dispositifs de verrouillage à soupape.

De manière particulièrement avantageuse, le procédé de fabrication d'un panier de cuisson d'aliments pour autocuiseur conforme à l'invention sera réalisé par emboutissage d'une feuille de métal, par exemple en inox.

Le tableau 1 ci-dessous montre, de manière comparative, les résultats de préservation de vitamine C obtenus en cuisson vapeur pour différents légumes, dans le cas d'une cuisson dans un panier classique de l'art antérieur et dans un panier selon l'invention, avec un moyen de réglage 20 selon l'invention obstruant totalement les perforations 4 du fond 2 (panier II) ou sans moyen de réglage 20 (panier I).

**TABLEAU 1**

| | Epinard | Haricot vert |
|---|---|---|
| Temps en min | | |
| Panier de l'art antérieur | 10' | 12' |
| Panier de l'invention 1 | 4' | 4'30 |
| Gain % | 60% | 62% |

| Rétention vitC % | | |
|---|---|---|
| Panier de l'invention I | 67% | 39% |
| Panier de l'invention II | 89% | 46% |
| Gain % | 32% | 18% |

Le panier de l'art antérieur était formé par un panier métallique perforé d'orifices de l'ordre de 3 mm environ, ces orifices étant ménagés à travers le fond du panier et représentant largement moins de 20% de la surface totale du panier. Le panier selon l'invention I était formé par un panier similaire à celui illustré aux figures 1 à 6, 9 et 10 sans moyen de réglage 20 et il comportait une série d'orifices 4 de diamètre de l'ordre de 5 mm environ répartis régulièrement sur la totalité de la surface du panier jusqu'au bord supérieur 6 et représentant 30% de la surface du panier.

Les résultats montrent de manière nette le gain de temps de cuisson obtenu qui, selon les légumes considérés, permet une réduction du temps de cuisson de l'ordre de 57 à 83%.

De la même façon, la préservation de la vitamine C dans les légumes considérés est largement augmentée, puisqu'on note une rétention supérieure de la vitamine C, variable selon les légumes considérés, mais qui permet un gain de rétention vitaminique pouvant varier de 39 à 89%.

Ces résultats améliorés sont à mettre en relation avec la configuration spécifique du panier selon l'invention dont la dimension, la répartition et la densité des perforations 4 permettent des mouvements optimaux du flux de vapeur, favorisant un excellent échange de chaleur à travers la totalité de la masse des légumes, ce qui permet une cuisson rapide et homogène, gage d'une meilleure rétention vitaminique.

Le panier selon l'invention II était formé par un panier similaire au panier de l'invention I, mais avec un moyen de réglage 20 tel qu'illustré aux figures 2 à 5.

Ces résultats font apparaître que lorsque l'on obstrue totalement les perforations 4 du fond du panier par le moyen de réglage 20, tel qu'illustré à la figure 5, la rétention de vitamine C atteint 89% au lieu de 67% (gain de 32%), sans perte de temps de cuisson pour des épinards. Simultanément, la quantité de vitamine C dans l'eau de cuisson chute de 11,4% à 4,5% du contenu initial de l'épinard cru. Des résultas comparables sont relevés pour les haricots verts, les effets étant moins sensibles pour d'autres légumes ou non encore disponibles.

Un gain notable de rétention vitaminique est néanmoins prévisible pour d'autres légumes sensibles au lessivage, tels que le brocoli ou le chou-fleur, pour lesquels la vitamine C est généralement disposée en périphérie du légume ou au niveau des fleurs.

Les deux paniers présentaient des caractéristiques techniques identiques aux deux paniers précédemment définis.

Selon les graphes, il apparaît que dans un panier I selon l'invention, les niveaux de températures étant mesurés à l'aide de quatre sondes réparties dans la partie centrale du panier à différentes hauteurs au sein des aliments, la montée en températures, quelque soit la sonde considérée, est particulièrement homogène et rapide, dans l'intervalle t₁ = 2 min 30 sec et t₂ = 5 min 30 sec, après le début de la cuisson. La température de cuisson courante est obtenue dès 5 min 30 sec de cuisson environ et est parfaitement égale et homogène au sein des aliments, quelque soit leur position dans le panier, puisque la température des quatre sondes est identique et de l'ordre de 110°C environ.

En revanche, dans un panier selon l'art antérieur, la température de cuisson des aliments est particulièrement hétérogène, les quatre courbes de températures n'étant (et encore imparfaitement) sensiblement égales entre les quatre sondes qu'après environ quinze minutes de cuisson.

Au cours de ces essais, la pression moyenne de cuisson était de l'ordre de 1,5 bar, chaque autocuiseur étant équipé d'un système de purge favorisant l'évacuation de la vapeur d'eau hors de l'enceinte de l'autocuiseur lors de la montée en pression.

Ces graphes montrent également la vitesse de montée en températures dans un panier I ou II selon l'invention, puisque dès l'atteinte de la pression moyenne de fonctionnement, autour de 110°C, la totalité de la masse des aliments atteint la température moyenne de fonctionnement de l'ordre de 110°C. Inversement, dans un panier de l'art antérieur, la température moyenne de 110°C n'est atteinte qu'après 14 à 15 min de fonctionnement.

## Revendications

1. Panier de cuisson d'aliments destiné à la cuisson sous pression dans un autocuiseur formé par une feuille d'un matériau rigide définissant le fond (2) et les parois latérales (3) du panier (1), ladite feuille étant pourvue de perforations (4), **caractérisé en ce que** les perforations (4) sont ménagées à travers le fond (2) et les parois latérales (3), ledit panier étant pourvu d'un moyen de réglage (20) du débit de vapeur passant à travers le panier (1) par les perforations (4), ledit moyen étant associé au fond (2) de manière à permettre de régler le passage de la vapeur à travers les perforations (4) au moins du fond (2).

2. Panier selon la revendication 1 **caractérisé en ce que** le moyen de réglage (20) est mobile relativement au fond (2) et comporte des orifices (21) permettant, par ajustement de la position dudit moyen, de découvrir totalement ou partiellement les perforations (4), ou de les recouvrir totalement.

3. Panier selon la revendication 2 **caractérisé en ce que** le moyen de réglage (20) est pourvu d'orifices (21) de taille et de répartition identiques à la taille et à la répartition des perforations (4) au moins du fond (2).

4. Panier selon la revendication 1 **caractérisé en ce que** le moyen de réglage (20) est monté mobile relativement contre le fond (2), par l'intermédiaire d'un moyen sensible à la chaleur (40), de manière à permettre de dégager les perforations (4) du fond dès l'atteinte d'une température préétablie.

5. Panier selon la revendication 3 **caractérisé en ce que** le moyen sensible à la chaleur est un bilame.

6. Panier selon l'une des revendications 1 à 5 **caractérisé en ce que** le moyen de réglage (20) est formé par une pièce de forme conjuguée à celle du fond (2), de manière à recouvrir le fond (2) sensiblement en totalité.

7. Panier selon l'une des revendications 1 à 6 **caractérisé en ce que** le panier est circulaire et le moyen de réglage (20) est formé par un disque (20A, 20B).

8. Panier selon la revendication 7 **caractérisé en ce que** la jonction entre le fond (2) et les parois latérales (3) présente une courbure de rayon R, le disque (20A, 20B) et ses orifices (21) s'étendant en partie sur la courbure.

9. Panier selon la revendication 8 **caractérisé en ce que** le disque (20A) et ses orifices (21) s'étendent sur 1/4 R.

10. Panier selon l'une des revendications 1 à 9 **caractérisé en ce que** les perforations (4) sont ménagées à travers le fond (2) et les parois latérales (3), de manière à représenter au moins 30% de la feuille, et de préférence entre 35 et 58%, lesdites perforations présentant un diamètre équivalent au moins égal à 3 mm.

11. Panier selon la revendication 1 **caractérisé en ce que** le moyen de réglage (20) est formé par un film d'un matériau poreux dont la porosité est suffisante pour réduire le débit de vapeur à travers les perforations (4) du fond (2).

12. Panier selon l'une des revendications 1 à 11 **caractérisé en ce que** le moyen de réglage (20) est disposé à l'intérieur ou à l'extérieur du panier, sur ou sous le fond (2).

13. Autocuiseur équipé d'un panier selon l'une des revendications 1 à 12.

## Claims

1. Basket for cooking food intended for pressure cooking in a pressure cooker formed by a sheet of rigid material defining the bottom (2) and the lateral walls (3) of the basket (1), the said sheet being provided with perforations (4), **characterised in that** the perforations (4) are provided through the bottom (2) and lateral walls (3), the said basket being provided with a means (20) of adjusting the flow of steam passing through the basket (1) through the perforations (4), the said means being associated with the bottom (2) so as to make it possible to adjust the passage of the steam through the perforations (4) at least in the bottom (2).

2. Basket according to claim 1, **characterised in that** the adjustment means (20) is able to move relative to the bottom (2) and comprises orifices (21) making it possible, by adjusting the position of the said means, to completely or partially uncover the perforations (4) or to completely cover them.

3. Basket according to claim 2, **characterised in that** the adjustment means (20) is provided with orifices (21) with a size and distribution identical to the size and distribution of the perforations (4) at least in the bottom (2).

4. Basket according to claim 1, **characterised in that** the adjustment means (20) is mounted so as to be able to move relatively against the bottom (2), by means of a heat-sensitive means (40), so as to make it possible to leave clear the perforations (4) in the bottom as soon as a pre-established temperature is reached.

5. Basket according to claim 3, **characterised in that** the heat-sensitive means is a bimetallic strip.

6. Basket according to one of claims 1 to 5, **characterised in that** the adjustment means (20) is formed by a piece with a shape conjugate with that of the bottom (2), so as to cover the bottom (2) substantially entirely.

7. Basket according to one of claims 1 to 6, **characterised in that** the basket is circular and the adjustment means (20) is formed by a disc (20A, 20B).

8. Basket according to claim 7, **characterised in that** the junction between the bottom (2) and the lateral walls (3) has a curvature of radius R, the disc (20A, 20B) and its orifices (21) extend partly over the curvature.

9. Basket according to claim 8, **characterised in that** the disc (20A) and its orifices (21) extend over 1/4 R.

10. Basket according to one of claims 1 to 9, **characterised in that** the perforations (4) are provided through the bottom (2) and the lateral walls (3), so as to represent at least 30% of the sheet, and preferably between 35% and 58%, the said perforations having an equivalent diameter of at least 3 mm.

11. Basket according to claim 1, **characterised in that** the adjustment means (20) is formed by a film of porous material whose porosity is sufficient to reduce the flow of steam through the perforations (4) in the bottom (2).

12. Basket according to one of claims 1 to 11, **characterised in that** the adjustment means (20) is disposed inside or outside the basket, on or under the bottom (2).

13. Pressure cooker equipped with a basket according to one of claims 1 to 12.

## Patentansprüche

1. Kochbehälter für einen Dampfdruckkochtopf, bestehend aus einer den Boden (2) und die Seitenwände (3) des Behälters (1) bildenden, Lochungen (4) aufweisenden Folie aus einem steifen Material, **dadurch gekennzeichnet, dass** die Lochungen (4) durch den Boden (2) und die Seitenwände (3) verlaufen, wobei der Behälter eine Regelvorrichtung (20) zur Regelung der über die Lochungen (4) durch den Behälter (1) strömenden Dampfmenge aufweist und die Vorrichtung dem Boden (2) derart zugeordnet ist, dass der durch die Lochungen (4) zumindest des Bodens strömende Dampf geregelt werden kann.

2. Behälter nach Anspruch 1, **dadurch gekennzeichnet, dass** die Regelvorrichtung (20) im Verhältnis zum Boden (2) beweglich ist und Öffnungen (21) aufweist, mit denen durch Verstellen der Vorrichtung die Lochungen (4) ganz oder teilweise freigelegt oder ganz abgedeckt werden können.

3. Behälter nach Anspruch 2, **dadurch gekennzeichnet, dass** die Regelvorrichtung (20) Öffnungen (21) aufweist, die in Größe und Verteilung mit der Größe und der Verteilung der Lochungen (4) zumindest des Bodens (2) übereinstimmen.

4. Behälter nach Anspruch 1, **dadurch gekennzeichnet, dass** die Regelvorrichtung (20) mittels einer wärmeempfindliche Vorrichtung (40) im Verhältnis zum Boden (2) beweglich angeordnet ist, sodass die Lochungen (4) des Bodens bei Erreichen einer voreingestellten Temperatur freigelegt werden.

5. Behälter nach Anspruch 3, **dadurch gekennzeichnet, dass** die wärmeempfindliche Vorrichtung ein Bimetall ist.

6. Behälter nach einem der Ansprüche 1 bis 5, **dadurch gekennzeichnet, dass** die Regelvorrichtung (20) durch ein Teil gebildet wird, dessen Form dem Boden (2) angepasst ist, sodass der Boden (2) im Wesentlichen ganz abgedeckt ist.

7. Behälter nach einem der Ansprüche 1 bis 6, **dadurch gekennzeichnet, dass** der Behälter kreisförmig ist und die Regelvorrichtung (20) durch eine Scheibe (20A, 20B) gebildet wird.

8. Behälter nach Anspruch 7, **dadurch gekennzeichnet, dass** der Übergang zwischen dem Boden (2) und den Seitenwänden (3) einen Krümmungsradius R aufweist, wobei sich die Scheibe (20A, 20B) und ihre Öffnungen (21) teilweise über die Krümmung erstrecken.

9. Behälter nach Anspruch 8, **dadurch gekennzeichnet, dass** sich die Scheibe (20A) und ihre Öffnungen (21) über 1/4 R erstrecken.

10. Behälter nach einem der Ansprüche 1 bis 9, **dadurch gekennzeichnet, dass** die Lochungen (4) derart durch den Boden (2) und die Seitenwände (3) verlaufen, dass sie mindestens 30 % und vorzugsweise zwischen 35 und 58 % der Folie ausmachen, wobei die Lochungen einen Durchmesser von mindestens 3 mm aufweisen.

11. Behälter nach Anspruch 1, **dadurch gekennzeichnet, dass** die Regelvorrichtung (20) aus einer Folie aus einem porösen Material gebildet wird, dessen Porosität ausreicht, um die durch die Lochungen (4) des Bodens (2) strömende Dampfmenge zu reduzieren.

12. Behälter nach einem der Ansprüche 1 bis 11, **dadurch gekennzeichnet, dass** die Regelvorrichtung (20) innen oder außen am Behälter, auf oder unter dem Boden (2) angeordnet ist.

13. Dampfdruckkochtopf mit einem Behälter nach einem der Ansprüche 1 bis 12.
